# EUROPÄISCHE PATENTANMELDUNG

(11) **EP 1 336 530 A2**
(43) Veröffentlichungstag der Anmeldung: **20.08.2003**
(21) Anmeldenummer: 03002914.4
(22) Anmeldetag: 10.02.2003
(51) Int. Cl.: B60N 2/28

(54) **Befestigungsvorrichtung für einen Kindersitz**

(30) Priorität: 19.02.2002 DE 10206780
(71) Anmelder: DaimlerChrysler AG, 70567 Stuttgart (DE); Keiper GmbH & Co., 67657 Kaiserslautern (DE)
(72) Erfinder: Rauscher, Frank, 72124 Pliezhausen (DE); Böhmer, Michael, 67806 Rockenhausen (DE); Hippel, Daniel, 67722 Winnweiler (DE)
(74) Vertreter: Bernhard, Uwe

(57) **Zusammenfassung**

Die vorliegende Erfindung betrifft eine Befestigungsvorrichtung (5) für einen Kindersitz auf einem Fahrzeugsitz (1), insbesondere Kraftfahrzeugsitz, mit wenigstens einem am Fahrzeugsitz (1) festgelegten Halteelement, welches ein Befestigungselement (6) haltert, das zwischen einer Gebrauchsstellung, in der es in einem Schlitz (4) zwischen einem Sitzkissen (3) und einer Rückenlehne (2) des Fahrzeugsitzes (1) hindurchragt, und einer Nichtgebrauchsstellung (Parkstellung) überführbar ist, in der es im wesentlichen im Schlitz (4) zwischen dem Sitzkissen (3) und der Rückenlehne (2) versenkt ist.

Für eine raumsparende Bauweise ist das Befestigungselement (6) so am Halteelement gehaltert, dass es zwischen seiner Gebrauchsstellung und seiner Parkstellung in einer im wesentlichen senkrecht zum Schlitz (4) verlaufenden Sitzlängsrichtung (8) translatorisch verstellbar ist.

## Beschreibung

Die Erfindung betrifft eine Befestigungsvorrichtung für einen Kindersitz auf einem Fahrzeugsitz, insbesondere auf einem Kraftfahrzeugsitz, mit den Merkmalen des Oberbegriffs des Anspruchs 1. Die Erfindung betrifft außerdem einen mit einer derartigen Befestigungsvorrichtung ausgestatteten Fahrzeugsitz.

Aus der DE 199 28 862 A1 ist eine derartige Befestigungsvorrichtung bekannt und weist wenigstens ein am Fahrzeugsitz festgelegtes Halteelement auf. An diesem Halteelement ist ein Befestigungselement gehaltert, das zwischen einer Gebrauchsstellung und einer Nichtgebrauchsstellung oder Parkstellung überführbar ist. In der Gebrauchsstellung ragt das Befestigungselement in einem Schlitz zwischen einem Sitzkissen und einer Rückenlehne des Fahrzeugsitzes hindurch. In der Parkstellung ist das. Befestigungselement im wesentlichen im Schlitz zwischen Sitzkissen und Rückenlehne versenkt. Das Befestigungselement ist dabei um eine im wesentlichen senkrecht zum Schlitz verlaufende Drehachse schwenkbar gelagert, so dass das Befestigungselement durch eine Schwenkverstellung um seine Drehachse zwischen seiner Gebrauchsstellung und seiner Parkstellung in einer den Schlitz enthaltenden Ebene verschwenkt. Die bekannte Befestigungsvorrichtung weist außerdem eine Riegeleinrichtung auf, mit der das Befestigungselement in seiner Gebrauchsstellung verriegelbar ist.

Aus der DE 100 35 777 C1 ist eine weitere Befestigungsvorrichtung der eingangs genannten Art bekannt, bei der das Befestigungselement als U-förmiger Bügel ausgebildet ist, dessen U-Schenkel einerseits am Halteelement und andererseits an einer gemeinsamen U-Basis jeweils um senkrecht zum Schlitz verlaufende Drehachsen schwenkbar gelagert sind. In der Gebrauchsstellung sind die U-Schenkel und die U-Basis relativ zueinander so angeordnet, dass sie zusammen den U-förmigen Bügel bilden, der im Schlitz zwischen Sitzkissen und Rückenlehne hindurchragt. Für die Parkstellung werden die U-Schenkel und die U-Basis um ihre Drehachsen soweit verschwenkt, dass sie ein gestrecktes Viereck oder ein Parallelogramm bilden, derart, dass das Befestigungselement im wesentlichen im Schlitz zwischen Sitzkissen und Rückenlehne versenkt ist.

Aus der DE 198 22 134 C1 ist ein weitere Befestigungsvorrichtung bekannt, bei der ein Befestigungselement in der Nähe der Rückenlehne am Sitzkissen von einem Halteelement so gehaltert ist, dass es zwischen einer Nichtgebrauchsstellung und einer Gebrauchsstellung überführbar ist. Dabei ist das Befestigungselement über eine Rastmechanik mit dem Halteelement verbunden, mit der das Befestigungselement in seine Parkstellung versenkbar und in seine Gebrauchsstellung ausfahrbar ist. Das Befestigungselement führt dabei eine translatorische Verstellbewegung durch, die im wesentlichen senkrecht zur Sitzfläche des Sitzkissens verläuft. Von Besonderheit ist dabei eine Ausführungsform, bei der die Rastmechanik als Zwei-Stufen-Mechanik ausgebildet ist, bei der eine erste Raststufe der Parkstellung und eine zweite Raststellung der Gebrauchsstellung zugeordnet ist.

Die vorliegende Erfindung beschäftigt sich mit dem Problem, für eine Befestigungsvorrichtung der eingangs genannten Art eine vorteilhafte Ausführungsform anzugeben, die insbesondere eine andere, z.B. raumsparende Verstellkinematik für das Befestigungselement ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, das Befestigungselement so am Halteelement zu lagern bzw. zu haltern, dass es beim Verstellen zwischen seiner Gebrauchsstellung und seiner Parkstellung ausschließlich eine translatorische oder bidirektionale Bewegung durchführt. Durch diese Maßnahme ist das Befestigungselement besonders einfach aus seiner Parkstellung in seine Gebrauchsstellung aus dem Schlitz herausziehbar. Wenn das Befestigungselement nicht benötigt wird, kann es ebenso einfach in seine Parkstellung zum Versenken in den Schlitz zurückgefahren werden. Da keine Schwenkbewegung vorliegt, kann die erfindungsgemäße Befestigungsvorrichtung quer zur Sitzlängsrichtung, also in Schlitzrichtung relativ kurz bauen.

Bei einer bevorzugten Ausführungsform kann das Befestigungselement durch einen U-förmigen Bügel gebildet sein, dessen U-Schenkel über eine U-Basis miteinander verbunden und im Halteelement in der. Sitzlängsrichtung translatorisch verstellbar gelagert sind. Das Befestigungselement weist hierdurch einen besonders einfachen und preiswerten Aufbau auf, der außerdem besonders raumsparend gestaltet ist.

Zweckmäßig kann das Halteelement für jeden U-Schenkel eine sich parallel zur Sitzlängsrichtung erstreckende Durchgangsöffnung aufweisen, in welcher der jeweilige U-Schenkel translatorisch geführt verstellbar ist. Auch diese Bauweise zeichnet sich durch ihre Kompaktheit aus.

Gemäß einer Weiterbildung kann jeder U-Schenkel an seiner von der U-Basis abgewandten Seite ein Ankerelement aufweisen, das einen größeren Querschnitt besitzt als die Durchgangsöffnung des Halteelements, so dass das Ankerelement in der Gebrauchsstellung des Befestigungselements in einem Randbereich der Durchgangsöffnung am Halteelement formschlüssig anliegt. Hierdurch ergibt sich für den Crashfall eine besonders wirksame Verankerung des Befestigungselements am Halteelement, da sich die Ankerelemente in Auszugsrichtung formschlüssig am Halteelement abstützen.

Um das Auffinden der Gebrauchsstellung zu vereinfachen, kann wenigstens ein Federelement vorgesehen sein, welches das Befestigungselement in seine Gebrauchsstellung antreibt.

Bei einer vorteilhaften Ausführungsform kann eine Rasteinrichtung vorgesehen sein, mit der das Befestigungselement in seiner Gebrauchsstellung und/oder in seiner Parkstellung verrastbar ist. Die Handhabbarkeit des Befestigungselements, beispielsweise zum Anbringen des Kindersitzes an dem Befestigungselement wird dadurch vereinfacht.

Gemäß einer Weiterbildung kann die Rasteinrichtung ein Rastelement aufweisen, dass quer zu wenigstens einem der U-Schenkel des Befestigungselements federelastisch verstellbar ist, wobei wenigstens einer der U-Schenkel an seiner Außenseite eine erste Rastkerbe aufweist, in welche das Rastelement eingreift, wenn das Befestigungselement seine Gebrauchsstellung erreicht. Zusätzlich oder alternativ kann der U-Schenkel an seiner Außenseite eine zweite Rastkerbe aufweisen, in welche das Rastelement eingreift, wenn das Befestigungselement seine Parkstellung erreicht. Für eine bessere Bedienbarkeit kann dieses Rastelement außerdem mit einer Handhabe versehen sein, die es ermöglicht, das Rastelement manuell aus der jeweiligen Rastkerbe auszurasten, um das Befestigungselement dann translatorisch verstellen zu können.

Bei einer anderen Ausführungsform kann die Rasteinrichtung eine Rastmechanik aufweisen, über welche das Befestigungselement mit dem Halteelement verbunden ist und mit der das Befestigungselement in seine Parkstellung versenkbar und in seine Gebrauchsstellung ausfahrbar ist. Bei einer derartigen Ausführungsform kann das Befestigungselement mit Hilfe der Rastmechanik auf einfache Weise durch jeweiliges Drücken in der Sitzlängsrichtung einerseits in die Parkstellung und andererseits in die Gebrauchsstellung überführt werden, wobei zusätzliche Bedieneinheiten für die Herstellung der beiden Stellungen des Befestigungselements vollständig entfallen können.

Gemäß einer bevorzugten Weiterbildung kann diese Rastmechanik zwischen Befestigungselement und Halteelement als Zwei-Stufen-Mechanik ausgebildet sein, durch dessen erste Raststufe das Befestigungselement in die Parkstellung und durch deren zweite Raststufe das Befestigungselement in die Gebrauchsstellung überführbar ist. Durch diese Bauweise wird eine besonders einfache und komfortable Bedienbarkeit der Befestigungsvorrichtung erreicht. Eine derartige Zwei-Stufen-Mechanik kann beispielsweise mit einer Steuernase realisiert werden, die fest mit dem Befestigungselement verbunden ist und davon quer zur Sitzlängsrichtung absteht und dabei in eine Steuerkulisse eingreift. Diese Steuerkulisse ist im seitlich angeordneten Halteelement ausgebildet, wobei das Halteelement quer zur Sitzlängsrichtung und quer zur Erstreckungsrichtung der Steuernase verschiebbar am Fahrzeugsitz gehaltert ist. Ein Federelement treibt dabei permanent das Befestigungselement in seine Gebrauchsstellung an. Eine derartige Rastmechanik ist in der obengenannten DE 198 22 134 C1 näher erläutert, so dass insoweit auf die dortige Beschreibung Bezug genommen wird.

Bei einer anderen Ausführungsform kann eine Riegeleinrichtung vorgesehen sein, mit der das Befestigungselement in seiner Gebrauchsstellung verriegelbar ist. Durch diese Maßnahme kann die Handhabung der Befestigungseinrichtung zusätzlich verbessert werden, da durch die Verriegelung auch bei hohen Mißbrauchskräften ein ungewolltes Versenken des Befestigungselements in seine Parkstellung verhindert wird. Es ist klar, dass zum Entriegeln des Riegelelements vorzugswelse ein Lösehebel oder ein entsprechender Betätigungsgriff vorgesehen ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen..

Es zeigen, jeweils schematisch,
- Fig. 1: eine perspektivische Ansicht auf einen mit einer Befestigungsvorrichtung ausgestatteten Fahrzeugsitz bei in ihre Gebrauchsstellung verstellten Befestigungselementen,
- Fig. 2: eine Ansicht wie in Fig. 1, jedoch bei in ihre Parkstellung verstellten Befestigungselementen,
- Fig. 3: eine perspektivische Ansicht auf eine Befestigungsvorrichtung nach der Erfindung,
- Fig. 4: eine Schnittansicht entsprechend den Schnittlinien IV in Fig. 3 durch die Befestigungsvorrichtung bei in seine Gebrauchsstellung verstelltem Befestigungselement und
- Fig. 5: eine Ansicht wie in Fig. 4, jedoch bei in seine Parkstellung verstelltem Befestigungselement.

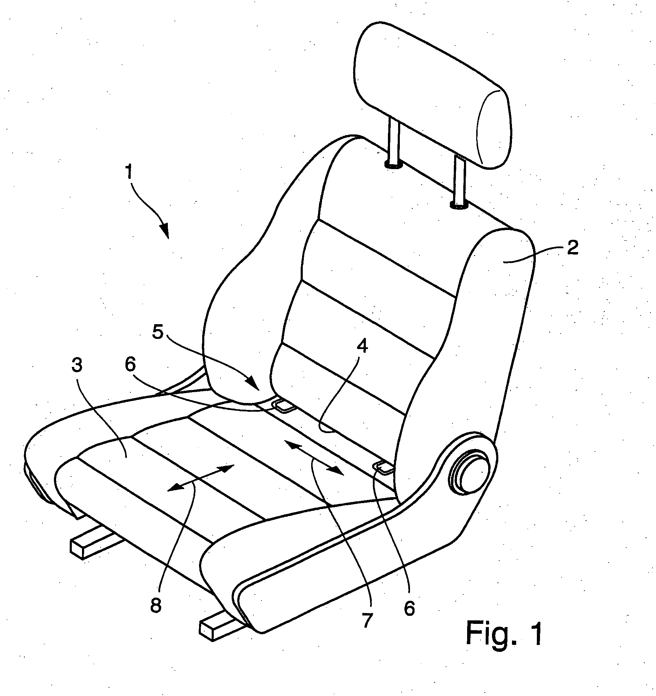

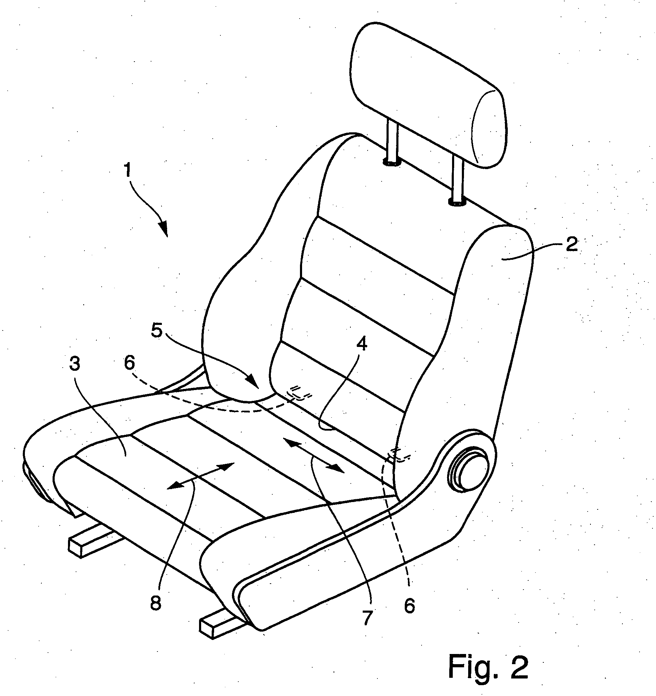

Entsprechend den Fig. 1 und 2 weist ein Fahrzeugsitz 1, insbesondere ein Kraftfahrzeugsitz eines im übrigen nicht dargestellten Kraftfahrzeugs, eine Rückenlehne 2 und ein Sitzkissen 3 auf. Zwischen Rückenlehne 2 und Sitzkissen 3 ist ein Schlitz 4 ausgebildet, an dem Rückenlehne 2 und Sitzkissen 3 aneinandergrenzen. Im Bereich dieses Schlitzes 4 ist eine erfindungsgemäße Befestigungsvorrichtung 5 am Sitz 1 angebracht. Diese Befestigungsvorrichtung 5 weist hier zwei Befestigungselemente 6 auf, die in einer durch einen Doppelpfeil symbolisierten Längsrichtung 7 des Schlitzes 4 voneinander beabstandet sind. Diese Befestigungselemente 6 sind jeweils als U-förmiger Bügel ausgebildet und sind zwischen einer in Fig. 1 dargestellten Gebrauchsstellung und einer in Fig. 2 gezeigten Nichtgebrauchsstellung oder Parkstellung verstellbar. In der Gebrauchsstellung ragen die beiden Befestigungselemente 6 im Schlitz 4 zwischen Rückenlehne 2 und Sitzkissen 3 hindurch und stehen dabei in einen Sitzbereich des Fahrzeugsitzes 1 vor. In ihrer Gebrauchsstellung sind die beiden Befestigungselemente 6 somit gut zugänglich, um beispielsweise einen hier nicht gezeigten Kindersitz an den Befestigungselementen 6 zu verankern.

In ihrer Nichtgebrauchsstellung oder Parkstellung sind die beiden Befestigungselemente 6 im Schlitz 4 zwischen Rückenlehne 2 und Sitzkissen 2 versenkt, so dass sie keine Beeinträchtigung des Sitzbereichs des Fahrzeugsitzes 1 darstellen.

Erfindungsgemäß sind die Befestigungselemente 6 zwischen ihrer Gebrauchsstellung und ihrer Parkstellung parallel zu einer durch einen Doppelpfeil symbolisierten Sitzlängsrichtung 8, die quer zum Schlitz 4 und in der Regel parallel zur Längsrichtung des mit dem Sitz 1 ausgestatteten Fahrzeugs verläuft, translatorisch verstellbar.

Gemäß den Fig. 1 und 2 erstreckt sich diese Sitzlängsrichtung 8 im wesentlichen senkrecht zur aufgerichteten Rückenlehne 2 bzw. etwa in der Sitzfläche des Sitzkissens 3. Die Sitzlängsrichtung 8 verläuft daher quer zum Schlitz 4 bzw. quer zur Schlitzlängsrichtung 7.

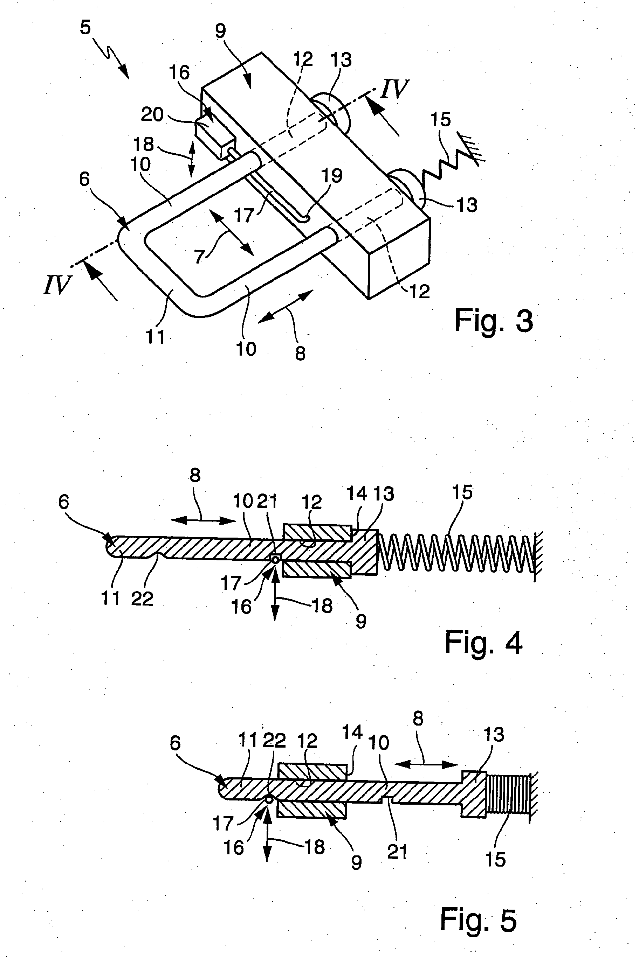

Entsprechend Fig. 3 besitzt die Befestigungsvorrichtung 5 für jedes Befestigungselement 6 ein Halteelement 9, das am Fahrzeugsitz 1 auf herkömmliche und daher nicht näher erläuterte Weise befestigt ist. Das Befestigungselement 6 ist als U-förmiger Bügel ausgebildet, der im wesentlichen aus zwei U-Schenkeln 10 besteht, die über eine U-Basis 11 miteinander verbunden sind. Die U-Schenkel 10 erstrecken sich parallel zur Sitzlängsrichtung 8 und durchdringen dabei Durchgangsöffnungen 12, die im Halteelement 9 ausgebildet sind. Diese Durchgangsöffnungen 12 sind parallel zur Sitzlängsrichtung 8 ausgerichtet und dienen dabei als translatorische Führung für die U-Schenkel 10. Auf diese Weise kann das Befestigungselement 6 in Richtung der Sitzlängsrichtung 8 relativ zum Halteelement 9 verstellt werden. Zweckmäßig können die Durchgangsöffnungen 12 jeweils eine hier nicht gezeigte Führungshülse, z.B. aus einem Kunststoff, enthalten, um die Reibung zu reduzieren und die Verstellbarkeit des Befestigungselements 6 zu verbessern.

Das Halteelement 9 kann dabei als relativ massiver Block aus Metall gebildet und einteilig oder mehrteilig hergestellt sein. Insbesondere kann das Halteelement 9 wie eine Schelle die U-Schenkel 10 seitlich umgreifen und zwischen zwei Hälften des Halteelements 9 haltern.

Jeder U-Schenkel 10 ist an seinem von der U-Basis 11 abgewandten Ende mit einem Ankerelement 13 ausgestattet, das zur sicheren Verankerung des Befestigungselements 6 am Halteelement 9 dient. Zu diesem Zweck besitzt jedes Ankerelement 13 einen Querschnitt, der größer ist als der Querschnitt der Durchgangsöffnung 12 im Halteelement 9. Dementsprechend kommt dieses Ankerelement 13 in der Sitzlängsrichtung 8 an einem Randbereich 14 der Durchgangsöffnung 12 am Halteelement 9 zur Anlage. Auf diese Weise ergibt sich eine effektive, formschlüssige Sicherung des Befestigungselements 6 gegen ein Herausziehen aus dem Halteelement 9. Die Ankerelemente 13 können, z.B. durch Stauchung, einstückig an den U-Schenkeln 10 ausgebildet sein. Ebenso ist es möglich, die Ankerelemente 13 als Schraubmuttern auszubilden, die auf die freien Enden der U-Schenkel 10 aufgeschraubt sind. Die Ankerelemente 13 können auch angeschweißt sein.

In den Fig. 3 bis 5 ist ein Federelement 15 symbolisch dargestellt, mit dessen Hilfe das Befestigungselement 6 in seine Gebrauchsstellung vorgespannt ist. Beispielsweise stützt sich das Federelement 15 dazu einerseits an einem der Ankerelemente 13 ab und andererseits an einem nicht näher bezeichneten sitzfesten Element.

Bei der hier gezeigten Ausführungsform ist außerdem eine besonders einfach gestaltete Rasteinrichtung 16 vorgesehen, die es ermöglicht, das Befestigungselement 6 sowohl in seiner Gebrauchsstellung als auch in seiner Parkstellung zu verrasten. Die Rasteinrichtung 16 weist ein Rastelement 17 auf, das hier einem der U-Schenkel 10 zugeordnet ist und quer zu diesem, also quer zur Sitzlängsrichtung 8 federelastisch entsprechend einem Doppelpfeil 18 verstellbar ist. Beispielsweise besteht das Rastelement 17 aus einem Federstahldraht, der bei 19 am Halteelement 9 befestigt ist. An seinem freien Ende trägt das Rastelement 17 eine Handhabe 20, die beispielsweise manuell mit einem Finger durch Niederdrücken betätigbar ist. Zweckmäßig ist das Rastelement 17 in diesem Freiheitsgrad, also quer zum U-Schenkel 10, durch eine nicht gezeigte Führung geführt.

Die Rasteinrichtung 16 umfaßt bei der hier gezeigten Ausführungsform eine erste Rastkerbe 21 sowie eine zweite Rastkerbe 22, die im zugeordneten U-Schenkel 10 ausgebildet sind. Entsprechend Fig. 4 ist die erste Rastkerbe 21 der Gebrauchsstellung des Befestigungselements 6 zugeordnet, so dass das Rastelement 17 dann in die erste Rastkerbe 21 eingreift, wenn das Befestigungselement 6 bis in seine Gebrauchsstellung ausgezogen ist. Im Unterschied dazu ist die zweite Rastkerbe 22 der Parkstellung des Befestigungselements zugeordnet, so dass das Rastelement 17 gemäß Fig. 5 bei Erreichen der Parkstellung in die zweite Rastkerbe 22 eingreift. Das Rastelement 17 ist dabei so federelastisch vorbelastet, dass es selbsttätig in die jeweilige Rastkerbe 21, 22 eingreifen kann, sobald eine entsprechende Überdeckung vorliegt. Zum Lösen der Verrastung kann über eine entsprechende Betätigung der Handhabe 20 das Rastelement 17 aus der jeweiligen Rastkerbe 21, 22 herausverstellt werden, so dass dann das Befestigungselement 6 wieder in der Sitzlängsrichtung 8 verstellbar ist.

Die beiden Rastkerben 21 und 22 weisen hier unterschiedliche geometrische Gestaltungen auf. Die der Parkstellung zugeordnete zweite Rastkerbe 22 besitzt abgerundete Flanken, so dass es bei einer hinreichenden Krafteinleitung in Auszugsrichtung möglich ist, auch ohne Lösebetätigung des Rastelements 17 das Befestigungselement 6 aus dem Schlitz 4 herauszuziehen. Das Rastelement 17 wird dabei durch die schrägen Flanken der zweiten Rastkerbe 22 verdrängt. Im Unterschied dazu sind bei der der Gebrauchsstellung zugeordneten ersten Rastkerbe 21 die Flanken senkrecht zur Auszugsrichtung des Befestigungselements 6 orientiert, wozu es ohne Beschädigung der Bauteile nahezu unmöglich ist, das Befestigungselement 6 ohne Betätigung des Rastelements 17 in seine Parkstellung zurückzuverstellen. Insoweit wirken das Rastelement 17 und die erste Rastkerbe 21 nach Art einer Verriegelung zusammen, mit der das Befestigungselement 6 in seiner Gebrauchsstellung verriegelbar ist.

Die durch die Rastkerben 21, 22 verursachte Schwächung des U-Schenkels 10 (bezüglich Material und Festigkeit) wird dadurch kompensiert, dass der jeweilige U-Schenkel 10 einen entsprechend größeren Querschnitt erhält. Im Unterschied dazu können die U-Basis 11 und gegebenenfalls der ungekerbte U-Schenkel 10 jeweils einen kleineren Querschnitt besitzen als der mit den Rastkerben 21, 22 versehene U-Schenkel 10.

Bei einer anderen Ausführungsform kann zusätzlich oder alternativ zum Rastelement 17 ein Riegel vorgesehen sein, der quer zu den U-Schenkeln 10 verschiebbar am Halteelement 9 gelagert ist und wenigstens einen der beiden U-Schenkel 10 zum Verriegeln seitlich umgreift, wobei eine Sperrflanke des Riegels in eine seitliche Aussparung, z.B. Kerbe, des U-Schenkels 10 formschlüssig eingreift.

## Patentansprüche

1. Befestigungsvorrichtung für einen Kindersitz auf einem Fahrzeugsitz (1), mit wenigstens einem am Fahrzeugsitz (1) festgelegten Halteelement (9), welches ein Befestigungselement (6) haltert, das zwischen einer Gebrauchsstellung, in der es in einen Schlitz (4) zwischen einem Sitzkissen (3) und einer Rückenlehne (2) des Fahrzeugsitzes (1) hindurchragt, und einer Nichtgebrauchsstellung (Parkstellung) überführbar ist, in der es im wesentlichen im Schlitz (4) zwischen dem Sitzkissen (3) und der Rückenlehne (2) versenkt ist,
**dadurch gekennzeichnet,**
**dass** das Befestigungselement (6) so am Halteelement (9) gehaltert ist, dass es zwischen seiner Gebrauchsstellung und seiner Parkstellung in einer im wesentlichen senkrecht zum Schlitz (4) verlaufenden Sitzlängsrichtung (8) translatorisch verstellbar ist.

2. Befestigungsvorrichtung nach Anspruch 1,
**dadurch gekennzeichnet,**
**dass** das Befestigungselement (6) durch einen U-förmigen Bügel gebildet ist, dessen U-Schenkel (10) über eine U-Basis (11) miteinander verbunden und im Halteelement (9) in der Sitzlängsrichtung (8) translatorisch verstellbar gelagert ist.

3. Befestigungsvorrichtung nach Anspruch 2,
**dadurch gekennzeichnet,**
**dass** das Halteelement (9) für jeden U-Schenkel (10) eine sich parallel zur Sitzlängsrichtung (8) erstreckende Durchgangsöffnung (12) aufweist, in welcher der jeweilige U-Schenkel (10) translatorisch geführt verstellbar ist.

4. Befestigungsvorrichtung nach Anspruch 3,
**dadurch gekennzeichnet,**
**dass** jeder U-Schenkel (10) an seinem von der U-Basis (11) abgewandten Ende ein Ankerelement (13) aufweist, das einen größeren Querschnitt aufweist als die Durchgangsöffnung (12), wobei das Ankerelement (13) in der Gebrauchsstellung des Befestigungselements (6) in einem Randbereich (14) der Durchgangsöffnung (12) am Halteelement (9) anliegt.

5. Befestigungsvorrichtung nach einem der Ansprüche 1 bis 4,
**dadurch gekennzeichnet,**
**dass** wenigstens ein Federelement (15) vorgesehen ist, welches das Befestigungselement (6) in seine Gebrauchsstellung antreibt.

6. Befestigungsvorrichtung nach einem der Ansprüche 1 bis 5,
**dadurch gekennzeichnet,**
**dass** eine Rasteinrichtung (16) vorgesehen ist, mit der das Befestigungselement (17) in seiner Gebrauchsstellung und/oder in seiner Parkstellung verrastbar ist.

7. Befestigungsvorrichtung nach Anspruch 6,
**dadurch gekennzeichnet,**
- **dass** die Rasteinrichtung (16) ein Rastelement (17) aufweist, das quer zu wenigstens einem der U-Schenkel (10) federelastisch verstellbar ist,
- wobei wenigstens einer der U-Schenkel (10) außen eine erste Rastkerbe (21) aufweist, in welche das Rastelement (17) eingreift, wenn das Befestigungselement (6) in seine Gebrauchsstellung verstellt ist, und/oder
- wobei wenigstens einer der U-Schenkel (10) außen eine zweite Rastkerbe aufweist, in welche das Rastelement (17) eingreift, wenn das Befestigungselement (6) in seine Parkstellung verstellt ist.

8. Befestigungsvorrichtung nach Anspruch 6 oder 7,
**dadurch gekennzeichnet,**
**dass** die Rasteinrichtung (16) eine Rastmechanik aufweist, über welche das Befestigungselement (6) mit dem Halteelement (9) verbunden ist und mit der das Befestigungselement (6) in seine Parkstellung versenkbar und in seine Gebrauchsstellung ausfahrbar ist.

9. Befestigungsvorrichtung nach Anspruch 8,
**dadurch gekennzeichnet,**
**dass** die Rastmechanik als Zwei-Stufen-Mechanik ausgebildet ist, durch deren erste Raststufe das Befestigungselement (6) in seine Parkstellung und durch deren zweite Raststufe das Befestigungselement (6) in seine Gebrauchsstellung überführbar ist.

10. Befestigungsvorrichtung nach einem der Ansprüche 1 bis 9,
**dadurch gekennzeichnet,**
**dass** eine Riegeleinrichtung vorgesehen ist, mit der das Befestigungselement (6) in seiner Gebrauchsstellung verriegelbar ist.

11. Fahrzeugsitz, insbesondere eines Kraftfahrzeugs, mit einer Befestigungseinrichtung (5) nach einem der Ansprüche 1 bis 10.
